# EUROPEAN PATENT SPECIFICATION

(11) **EP 2 253 457 B1**
(45) Date of publication and mention of the grant of the patent: **21.12.2016**
(21) Application number: 10008406.0
(22) Date of filing: 09.07.2003
(51) Int. Cl.: B29C 65/02, B29C 69/00, B29C 69/02, B29B 11/10, B29C 47/00, B29C 51/26, B29L 22/00

(54) **Multistage process for producing hollow plastic articles from half shells**
Mehrstufenverfahren zur Herstellung hohler Kunststoffartikel aus Halbschalen
Procédé à phases multiples pour produire des articles creux en plastique à partir de demi-coques

(30) Priority: 12.07.2002 DE 10231866; 08.10.2002 US 416990 P
(43) Date of publication of application: 24.11.2010
(62) Divisional of application: 03763751.9
(73) Proprietor: Basell Polyolefine GmbH, 50389 Wesseling (DE)
(72) Inventor: Rohde, Wolfgang, 67346 Speyer (DE); Meyer, Jörg, 67125 Dannstadt- Schauernheim (DE); Sattel, Rainer, 67165 Waldsee (DE); Schnorr, Jörg, 67071 Ludwigshafen (DE); Springholz, Bernhard, 76316 Malsch (DE); Weinlein, Roger, 60322 Frankfurt (DE); Wüst, Andreas, 64673 Zwingenberg (DE)
(74) Representative: Seelert, Stefan

(56) References cited:
- EP-A1- 1 184 157
- DE-A1- 10 010 900
- GB-A- 1 410 215
- JP-A- 2 088 236
- JP-A- 61 261 021
- US-A1- 2001 015 513

## Description

The present invention relates to a multistage process for producing hollow plastic articles from half shells. The present invention further relates to hollow plastic articles which can be produced by the abovementioned process, and also to the use of these, for example as plastic fuel tanks in motor vehicles.

Hollow plastic articles in the form of fuel tanks have almost completely replaced tanks made from metallic materials usually used hitherto in motor vehicle construction. Furthermore, portable or movable containers of all types are nowadays produced almost exclusively from plastics, examples being gasoline canisters, plastic bottles, plastic drums, and plastic containers for combustible liquids, hazardous materials, or the like. The particular advantage of plastic containers and tanks is especially their lower weight/volume ratio and the elimination of corrosion problems, and also the low cost of production.

Various processes can be used to produce hollow plastic articles. Besides the process known as rotational sintering, a process especially used for large-scale mass production is blow molding, including coextrusion blow molding.

The existence world wide of legal requirements for the reduction of ozone-forming emissions, such as fuel-related emissions, means that plastic fuel tanks (PFTs) in all vehicles have to prevent discharge of fuels under stationary and operating conditions. If the plastic used to produce a plastic fuel tank does not have inherent barrier properties, additional measures have to be taken to reduce permeation, examples being fluorination (in-line or off-line), painting or coating, plasma polymerization, the use of blends (Selar® process), or coextrusion processes (incorporation of various barrier polymers within a multilayer composite). JP 2-88236 A, for example, describes a plastic fuel tank comprising a polyamide barrier layer.

In addition to this, in order to fulfil legal requirements relating to the avoidance of fuel emissions from the fuel system it is increasingly necessary to integrate parts within the interior of the tank. The parts, such as lines or valves, may be incorporated prior to or after any coating process required. It is only possible to incorporate parts prior to the coating process if the incorporated parts are not damaged by the coating process. If the coating process takes place prior to incorporation of any parts, the coating is likely to be damaged at attachment points (welds) in the tank.

A process used to construct multilayer hollow articles is the abovementioned coextrusion blow molding process. Blow molding or coextrusion blow molding is a widely used technique but has the disadvantage that it is impossible, or possible only to a very limited extent, to integrate components, e.g. fuel system components, after production of the hollow plastic article.

DE 198 14 314 describes what may be called a melt compression process. In this, a coextruded parison, for example in the form of a tube from a blow molding plant, is placed in a mold and, using a ram or negative mold, pressed to give a half shell. DE 100 10 900 A1 discloses a press molding process in which the shaping of the polymer articles occurs in a two-sided forming in which the two mold halves and the core of the utilized apparatus are shaped according to the design of the final product. A disadvantage is that prior to the welding process the ram has to be removed from the mold, making it impossible to use the heat for welding. In addition, marked melt-compression flow takes place parallel to the mold surface during pressing, and although this permits successful control of total wall thickness via the geometric dimensions of mold and ram there can be local thinning of the mostly free flowing barrier polymer melt, in turn giving non-uniform barrier action across the hollow plastic article.

Another production process known from the prior art, what may be called the thermoforming process or twin-sheet process, begins by manufacturing two half shells via thermoforming of appropriate semifinished sheets, and welds these to one another in a second step of the process. JP 61-261021 A discloses an extrusion process in which a molten resin is extruded through an extrusion head having an annular flow path and separated by flow dividers into two pieces and the pieces are deformed by guide members into two sheets of uniform thickness. GB 1 410 215 describes a method of forming a hollow article comprising the steps of positioning two sheets of heated thermoplastic material into two sections of a mold having an intermediate mold plate, closing the mold and preforming the article, removing the intermediate mold plate and then finally forming the hollow article. However, one of the fundamental disadvantages of this process is that the wall thickness distribution in the tank half shells is not fully controllable. The reason for inadequate controllability of the wall thickness distribution and therefore of the barrier layer thickness distribution is that the semifinished sheets have uniform wall thickness and therefore, depending on the stretching ratios during thermoforming, there can be marked local reduction of the wall thickness or barrier layer thickness.

DE 100 42 121, corresponding to EP 1 184 157 A1, discloses a process for producing hollow plastic articles by first producing a tubular plastic parison on a blow molding or coextrusion blow molding plant and then cutting this open to give at least one planar-surface part, and then thermoforming the resultant planar-surface parts to give half shells and welding them to one another to give a hollow article.

The principle of that process for producing hollow plastic articles is that a plastic parison produced on a blow molding or coextrusion blow molding plant is cut open in an axial direction and the resultant molten planar-surface semifinished sheets are placed in two thermoforming molds and formed to give the desired shape. This method gives two half shells which can then be welded to one another using the heat from thermoforming. This process has disadvantages in that when components are incorporated in the interior of the half shells these progressively cool, the result being that the components subsequently have to be heated prior to welding, and this leads to the development of stresses in the weld which in the finished PFT give rise to notching and points of weakness. The stability of the PFT also depends decisively on the quality of the pinch-off edges on the half shells. Stresses induced within the plastic here likewise have an adverse effect on the mechanical load-bearing capability of the hollow plastic article.

US patent application 2001/0015513 describes another process of the prior art. Here, a single-stage process is used to produce the hollow articles on a two-part blow molding plant via immediate welding and blow molding of two half shells after cutting open of an extruded tubular plastic preform to give two sections. Any incorporated parts here are introduced into the hollow article as it develops simultaneously with the closing of the mold halves by way of a robot. This procedure implies high apparatus costs and control costs.

The above descriptions show that the processes known in the prior art for producing hollow plastic articles have many serious disadvantages.

It is an object of the present invention to meet the urgent need for provision of a process which produces hollow plastic articles and eliminate the abovementioned disadvantages of the prior art. A further object of the present invention is to develop a process which continues to use the existing coextrusion blow molding plants or blow molding plants widely used in industry. Further objects are apparent from the following description of the invention.

We have found that this object is achieved in relation to the process by the features of claim 1.

Advantageous embodiments of the process of the invention are defined in the process subclaims.

In one preferred embodiment of the process of the invention, incorporated parts, where appropriate preassembled, for example lines, valves, pumps, filters, etc., are introduced into one or, where appropriate, even both half shells after step d) of the process.

For the purposes of the present invention, "plastic parison" is an extruded and preferably tubular preform which comes from the extrusion or coextrusion plant and retains melt heat, made from at least one, where appropriate two or more, layers of plastic. "Semifinished products" are the planar-surface structures produced by cutting the parison open, these then being molded, i.e. provided with a prescribed three-dimensional spatial structure open on one side, in blow molding molds and/or thermoforming molds. According to the invention, "half shells" are the shell-type structures which are formed by molding the semifinished products and which are then bonded to give hollow plastic articles.

It has been found that the process of the invention eliminates the disadvantages of the known processes of the prior art for producing hollow plastic articles. The use according to the invention of a intermediate frame or of a plate insert, and the opening and closing of the mold halves at various closure points, permits subdivision of the process previously known from DE 100 42 121 into functional steps, and this substantially facilitates incorporation of components into the interior of the hollow article, and permits a decisive improvement in the quality of the hollow articles. The process of the invention also permits problem-free incorporation of relatively large components in the interior of the hollow article, substantially without contact with the unmolded semifinished product.

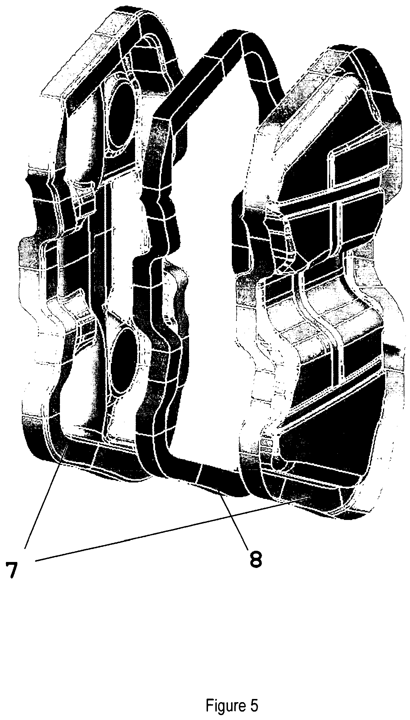

The principle of the process of the invention for producing hollow plastic articles is that a plastic parison produced on a blow molding plant or coextrusion blow molding plant is cut open in an axial direction and the resultant molten, planar-surface semifinished sheets are introduced into two mold halves, and a removable intermediate frame separates these along the peripheral edge on closing of the mold, so that there is no substantial contact between the two semifinished plastic products. Use of the intermediate frame (Figure 5) permits the two half shells to be fully molded, substantially independently of one another, in their respective mold halves, and the half shells can then be bonded to one another without removing them from the molds, after removal of the intermediate frame. This method can even introduce large incorporated parts, and also permits the half shells then to be welded to one another, for example, "while still hot", i.e. substantially without any need to reheat the entire half shells.

The design of the intermediate frame of the invention may also be that of a plate insert which substantially provides complete filling of the area between the two mold halves. For the purposes of this invention, therefore, a intermediate frame can always be a frame in the form of a plate. The intermediate frame or plate insert may be of single-part or multi-part design, and its shape has to adapt to the edge profile of the mold. It will therefore have curvature as required by the mold parting. Even though the parting surface may be complex, the selection of the contact surface for the frame may be such as to maximize the simplicity of the 3D profile (Figure 5). If use is made of divided, multipart intermediate frames or, respectively, plate inserts, the parts are preferably independent of one another, or else movably coupled to one another.

The multistage process of the invention first closes the mold halves onto the intermediate frame in such a way that between each mold half and the frame there is a parison which has previously undergone division into two parts, but the parisons or semifinished products do not come into direct contact with one another. After molding of the semifinished products in the mold halves in a first step, the mold is opened and the intermediate frame is removed. At this juncture, there is full access to the inside of the subsequent hollow article, and it is therefore now possible to attach even large incorporated parts and position them precisely.

In a second step, a further closure movement then provides the final closing of the mold halves together, so that the semifinished products come into direct contact with one another and can then be bonded or welded. The term multistage is therefore used for the process described. In the two stages described, the displacement at which the mold is regarded as closed differs by the thickness of the intermediate frame.

The removal of the intermediate frame from the space between the mold halves may take place by translation or rotation, and a suitable robot may also be used for this purpose.

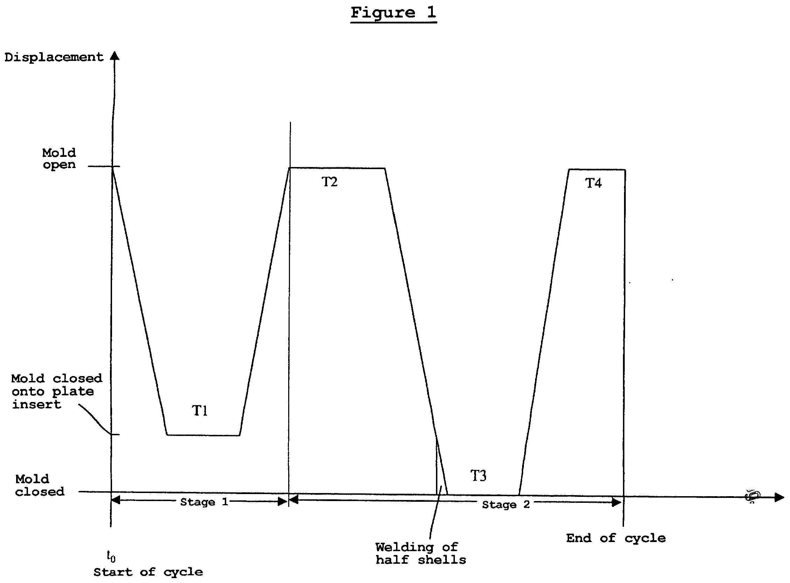

Figure 1 shows a displacement/time diagram for the process of the invention. The molding cycle for the planar-surface parts begins with an open mold at the juncture to. Once the semifinished products have been placed in the mold halves, these are closed onto the intermediate frame or plate insert, and then during the period T1 the two half shells are shaped by blowing and/or thermoforming from the inside. The mold is then reopened at the end of this first stage of the process. During the period T2 there is now open access to the inside of the two half shells, providing the opportunity to position incorporated parts, for example, or coat the insides of the half shells. The intermediate frame is removed at the same time. The mold halves, this time without intermediate frame, are then closed together, whereupon the semifinished products are bonded or welded together. During the period T3, with the mold closed, a second stage of the process now uses blowing and, where appropriate, thermoforming to provide substantially complete shaping and cooling of the hollow article formed from the welded half shells. The mold is then reopened, and during the period T4 the hollow article is removed from the mold and the intermediate frame is reinserted, permitting recommencement of the cycle from the start.

The process of the invention permits completely free control of the nature of the half-shell-molding procedure by varying the process parameters in the first step (= stage 1), the closure of the mold with intermediate frameed, and in the 2nd step (= stage 2), closing without frame. This becomes possible because the periods T1-T4 are variable and can be freely selected in accordance with the respective requirements.

For example, if the time selected for stage 1 (T1) is longer than the second closure time without intermediate frame T3, the result is substantially molding by thermoforming. In the reverse case, if the second closure time T3 is longer, the hollow article is formed substantially by blow molding. Between these, it is possible to set any of the intervening levels for the ratio of the molding methods to one another, i.e. any desired single- or multistage combinations of thermoforming procedures and blow molding procedures.

If the setting of the process parameters is such that the magnitude of stage 1 is approximately that of the entire cycle time, the process corresponds to the production of thermoformed half shells which are individually removed in order to be subjected to completion subsequently. A moderate level of the ratio of stage 1 to stage 2 - this level being dependent on the final product, inter alia - results in moldings by what may be called the EVBM (extrusion vacuum blow molding) process. The duration (T1) selected for stage 1 is such that the half shells can retain their shape, for example to allow incorporation of parts in the period T2, but at the same time the plastic is sufficiently hot to be welded during the second closure time T3. One way of improving shape retention is to apply a vacuum between the mold and the plastic, for example via suitable holes through the mold extending to the cavity. In contrast, if the duration of the first stage of the process (closing with frame) is shortened so greatly that it approaches zero, the process corresponds to the known blow molding process.

This variability of the process of the invention permits precise individual adaptation of the molding steps to the structural requirements of the molds and of the hollow article to be produced.

In addition, the blow molding and thermoforming steps can be selected as appropriate for the rheology of the respective plastics used, so as to allow the semifinished product to fit into the mold halves in an ideal manner and with consistent thickness.

Another particular advantage is that, in the process of the invention, when the mold is opened to remove the intermediate frame the two half shells are fully accessible, considerably facilitating the incorporation of components in the interior of the container. Because the semifinished products or half shells remain in the mold halves here, appropriate temperature-control of the mold and of the intermediate frame/plate insert can avoid any excessive cooling of the plastic, particularly at the subsequent inside of the hollow article, thus permitting direct welding of incorporated parts to the plastic which retains melt heat and ensuring that the half shells are still sufficiently hot to be welded to one another directly in the subsequent step.

The production of the planar-surface parts by way of a blow molding plant also permits accurate and reproducible wall-thickness control and high design freedom, due to the high flexibility of the molding steps. When a coextrusion blow molding plant is used, layers made from barrier polymers can be integrated into the semifinished product. If a single-layer semifinished product is manufactured on a blow molding plant, barrier layers can be employed subsequently, for example by fluorination or painting. The coating procedures may advantageously take place on the fully accessible half shells after opening of the mold, prior to or after the attachment of incorporated parts.

The intermediate frame of the invention fulfils a number of functions. The main function is to hold or secure the peripheral edge of the semifinished product in the mold half during the molding procedure. The frame also serves as a surface which applies pressure during pinch-off of the semifinished product by way of the pinch-off edge of the mold. The functions of securing and pinch-off are decisively affected by the geometry and design of the edge regions, both of the intermediate frame and of the mold. In the invention, it is preferable for the edges of the mold to have a differentiated design in order to provide controlled contact between the semifinished product and the intermediate frame. The manner of sealing-off of the semifinished product is such as to permit at least some degree of blowing of the semifinished product before the first molding stage has ended, without hindering the subsequent formation of a clean pinch-off weld.

In particularly preferred embodiments of the invention, the intermediate frame or plate insert can assume other functions, for example the controlled introduction or dissipation of compressed air via appropriate holes. This permits the function of flushing or ventilation to be exercised. It is also possible for additional functional units, including moveable functional units, such as stamps or jaws, to be arranged on, or integrated on or in, the frame. The intermediate frame may also be used as a support for components to be introduced.

To support the functions of the intermediate frame, this may have equipment for the cooling or heating of at least one subregion of the frame. The temperature control may provide differences as a function of time and/or of location, and certain regions of the frame/plate may therefore, where appropriate, be capable of control to different temperatures during a process cycle. An example of a method for temperature control is to pass a suitable cooling medium or heating medium through channels. It is also possible to use electrical cartridge heaters or thermocouples. Particular preference is given to precise temperature control, preferably heating of the pinch-off edge of the mold, in order to achieve greater homogeneity and freedom from stress at the pinch-off edge.

Since partial local cooling of the edge by which the semifinished product is secured occurs during the thermoforming process, stresses can develop in the plastic during the pinch-off procedure, and can adversely affect mechanical performance and pinch-off weld quality. Another result of the cooling is that reheating has to be used, where appropriate, in order to obtain the welding temperature needed for the subsequent welding of the half shells to give the finished hollow article. This likewise brings about stresses in the plastic, which result in development of notching and points of weakness in the finished hollow article. For these reasons, in one preferred embodiment of the present invention the edge region of the half shell is locally heated or locally temperature-controlled. The temperature control of the plate insert in the region in contact with the pinch-off edge of the mold preferably takes place on both sides of the edge of the plate, or else may be present only on one side.

The present invention also provides a hollow plastic article which can be produced by the process described above. The invention provides preferred use of the hollow plastic articles prepared by the process of the invention as plastic fuel tanks in motor vehicles, or else as a gasoline canister, a plastic tank for storage or transport of heating oil, diesel, or the like, or a transport container on a utility vehicle, for example for crop sprays, or a solvent container, plastic bottle, or the like.

Another advantage of the production process of the present invention is that, prior to the bonding of the molded semifinished products, it is possible without difficulty where appropriate to attach incorporated parts, such as components of a fuel system, to the inside of the half shells. The invention therefore provides for incorporated parts, such as ventilation lines for pressure equilibration within the tank, fuel lines for equilibration of liquids within the tank, valves, anti-surge cups, or pump-related and/or tank sensor modules, for example, to be attached to the inside of the half shells before welding the thermoformed semifinished products.

The semifinished products may be bonded by adhesive bonding with suitable adhesives or by hot welding, or by a combination of these two. Preference is given to welding. The welding of the semifinished products preferably takes place "while still hot", i.e. the edges of the half shells which still retain melt heat after molding in stage 1 and removal of the intermediate frame are brought directly into contact with one another by closing the mold halves in stage 2, and the half shells are directly welded to one another, with flash pinch-off.

In the process of the invention it is advantageous for there to be no, or only slight, cooling prior to the bonding of the two semifinished products. The nature of the process means that cooling mainly takes place externally. The insides of the semifinished products, the edges of which are brought into contact and welded in stage 2 during period T3, generally retain melt heat, and therefore remain weldable, for a prolonged period. In one particularly preferred embodiment of the process, no additional heating steps or cooling steps are needed for producing the hollow plastic article from the (co)extruded tubular parison which retains melt heat.

According to the invention, this may be achieved by providing equipment for cooling or heating in the intermediate frame, as described above.

Another substantial advantage of the process of the invention is that precise control is possible of the wall thickness of the plastic parison on the coextrusion blow molding plant used. The precise control of the wall thickness of the parison on the coextrusion blow molding plant gives a significant improvement in wall-thickness control in the subsequent thermoforming process. The diameter or circumference of the plastic parison is set by way of the diameter of the parison die, and has to be adapted to the requirements of the subsequent steps of the process. The wall thickness of the plastic parison may be controlled in an axial direction during the extrusion process with the aid of the variable die gap. Radial wall thickness control may also be implemented by using profiled die/mandrel pairs or flexible die rings which can be deformed using suitable actuators (partial wall-thickness control).

During or after discharge of the molten plastic from the die to give a desired length which has to be adapted, where appropriate, to the requirements of the subsequent steps of the process and to the geometry of the finished part, the parison is cut open to give at least one, preferably two, or else more, for example three or four, planar-surface parts. In the process of the invention, the cutting of the plastic parison takes place prior to separation from the die, i.e. before the extrusion process is complete, or immediately afterward.

In another particularly preferred embodiment, the plastic parison is extended perpendicularly to the direction of extrusion with the aid of a stretching device prior to cutting. If only one side of the tubular parison is cut open, the result is a large-surface-area semifinished product which can be placed over a thermoforming mold with two chambers for the upper shell and lower shell in such a way that two half shells are produced and are then separated from one another and welded. It is preferable for two sides of the tubular parison to be cut open so that two planar-surface parts are obtained, each of which is molded into a thermoforming mold. The invention also provides for the parison to be cut open to give more than two parts and, where appropriate, for the finished part to be manufactured from more than two subshells.

The resultant plastic parts are then further processed by a thermoforming process to give semifinished products of half-shell type. Existing coextrusion blow molding plants may also be used advantageously for the process of the invention. It is merely necessary for the blow molding plants to be supplemented by appropriate cutting units, preferably robots, and thermoforming units, and it is in principle also possible here to use the existing clamping units of the blow molding plants for the thermoforming, completion, and welding processes.

It has been found that the use of conventional cutting devices used for separating plastic webs, for example conventional steel blades, has serious disadvantages. In particular, it has been found that the plastic melt often adheres to the equipment or the blade. This adhesion leads to undesirable deformation of the parison and of the molten semifinished sheets (known as curtains) obtained after the separation procedure. It has also been found that in many instances, in particular at the start of the extrusion procedure, the pressure of the upstream melt is not sufficient for the desired cutting procedure to be carried out. The resistance exerted by the cutting device or the knife on the parison is frequently so great as to result in marked warping of the parison, in particular at the start of the extrusion process, i.e. at the start of discharge of the tube from the die. This leads to considerable deformation of the resultant cut edges, and also of the curtains themselves.

In the process of the invention the plastic melt is separated with the aid of flow dividers arranged in the interior of the blow molding head. These flow dividers may be used simply as displacers which create a point of weakness in the parison tube with severity sufficient for the parison to break apart spontaneously or with slight assistance.

The second possibility is a procedure similar to the process for producing a window strip, in which a transparent plastic is fed in by way of the flow dividers. The plastic used for the purpose of separating the tube is incompatible with the plastics of the parison. Due to the incompatibility, the "separator strip" thus introduced can be pulled away without any great effort, whereupon the remaining tube sections (curtains) are then used as planar-surface parts in the process of the invention. Examples of suitable incompatible polymers are polyamides, polystyrene, and, where appropriate, also polypropylene.

One way of considerably reducing the resistance produced when the parison encounters the cutting device is to give the cylindrical parison a "point of weakness". In this connection, it has been found that the use of polymers incompatible with the base polymer of the parison permits very simple separation. Incompatibility in this connection means that no welding of the base polymer to the coextruded polymer occurs. Appropriate polymers are mentioned above.

The invention provides for the use of robots for individual operations in the process, in particular for the separation, transport, and cutting of the plastic parison, and also the insertion of incorporated parts into the hollow article.

The hollow plastic articles produced by the process of the invention preferably have a structure of two or more layers, since the plastic material is subject to high stress levels and requirements are stringent, for example with respect to barrier action.

The hollow plastic articles of the invention preferably have a structure of at least two layers. These layers always involve a supporting base layer which usually forms the inner surface of the hollow article. This layer is therefore of decisive importance for the leakproof nature of the container and its mechanical stability.

In one particular embodiment, the plastic parison produced has at least one layer made from polymeric material, preferably selected from the group consisting of polyethylene, polypropylene, polyvinyl chloride, polyamide, polyketone, polyester, and mixtures of these. The plastic parison produced preferably has at least one layer made from polyethylene, in particular polyethylene with a density of 0.93 to 0.97 g/cm³.
In another preferred embodiment, the plastic parison has a structure composed of two or more layers, preferably encompassing base layer, regrind layer, adhesion-promoter layer, and/or barrier layer.

The layer thickness distribution within the finished part and therefore the parison depends on the number of layers. Given below is the layer thickness distribution in a plastic parison produced by the process of the invention and having a structure composed of six layers. A particularly preferred embodiment produces a plastic parison and, respectively, a hollow plastic article with a structure composed of six layers, encompassing, from the outside to the inside:
a layer made from HDPE with thickness from 5 to 30%,
a regrind layer with thickness from 10 to 82%,
an adhesion-promoter layer with thickness from 1 to 5%,
a barrier layer with thickness from 1 to 10%,
an adhesion-promoter layer with thickness from 1 to 5%,
a layer made from HDPE with thickness from 10 to 40%,
based in each case on the total thickness of the container wall.

Suitable base materials encompass high-density polyethylene (HDPE) with a density of from 0.940 to 0.960 g/cm³, in particular from 0.943 to 0.955 g/cm³, and particularly preferably from 0.943 to 0.950 g/cm³. The melt flow ratio of polyethylene materials suitable for the invention is from 1.5 to 20 g/10 min (MFR (190°C/21.6 kg)), in particular from 2 to 10 g/min, and particularly preferably from 3 to 8 g/10 min. Other abovementioned polymeric materials are, of course, also suitable as supporting base material.

Suitable barrier materials encompass ethylene-vinyl alcohol copolymer (EVOH), polyamide, and also other barrier polymers, such as polyesters, in particular polybutylene terephthalate, fluoropolymers, such as polyvinylidene fluoride, ethylene-tetrafluoroethylene copolymer (ETFE), tetrafluoroethylene-hexafluoropropylene-vinylidene fluoride copolymer (THV), and also liquid-crystalline polymers (LCPs). Other suitable materials are mixtures of the abovementioned barrier materials with nanoparticles. For the purposes of the present invention, nanoparticles are inorganic phyllosilicates whose atomic layers have been parted and thus loosened by intercalated organic molecules. The atomic layers can be separated by incorporation into polymeric materials, bringing about extremely fine distribution of the particles. The surface of the dispersed particles brings about extreme lengthening of the diffusion path for any permeating molecule, the result being reduced permeation.

Adhesion promoters suitable for the invention encompass polar-modified polyethylenes (HDPE or LLDPE and LDPE). The polar modification is usually a result of graft copolymerization with polar molecules having C=C double bonds, for example fumaric acid, maleic acid, or maleic anhydride. The grafted polyethylenes may also be chemically modified in downstream reactions, for example by introducing amino groups. Other materials suitable in principle as adhesion promoters are copolymers of ethylene with vinyl acetate, acrylic acid, or its esters.

The layer which may be called the regrind layer is preferably produced from what is known as flash, for example that produced during production of the hollow plastic articles and taking the form of residual materials or of production residues.

Further embodiments of the invention provide that the half shells or the hollow plastic article prior to and, respectively, after the welding of the two thermoformed semifinished products are/is given an additional permeation-reducing coating. The permeation-reducing coating may be obtained on the plastic containers by direct fluorination, painting, or plasma polymerization, for example.

Express reference is made to the fact that the following description of the process of the invention merely covers examples of the possible embodiments. The invention also provides other embodiments which likewise embody the principle of the process of the invention.

In the first step of the process of the invention, a plastic parison is first produced, for example using a 6-layer coextrusion blow molding plant as produced and marketed by the company Krupp Kautex Maschinenbau. The coextrusion process gives a tubular parison composed of six layers. The layer structure of the parison corresponds to the structure described above (from the outside to the inside: HDPE, regrind, adhesion-promoter, barrier polymer, adhesion-promoter, HDPE). The layer thickness distribution of the parison is likewise within the ranges given above.

During the coextrusion process, the parison wall thickness is adapted to the geometry of the finished part in such a way as to give maximum consistency of wall thickness distribution in the finished part, with no thin areas. The parison wall thickness here is controlled by a suitable program which controls the die gap as a function of time (WDS), and, where appropriate, also by radial die gap control (PWDS). The wall thickness distribution depends on the requirements placed upon the mechanical performance of the material, and also in the case of plastic fuel tanks on the required fire performance. The diameter or circumference of the parison tube is adapted to the requirements of the mold and can be set without difficulty by way of the selection of the diameter of the die.

The plastic parison is extruded to the length required for the respective mold. The invention provides that the parison can be extruded by way of a suitable stretching device, which in the simplest case is composed of two bars mounted vertically and capable of being moved away from one another hydraulically, for example. If the two bars arranged parallel or else at an angle to one another and located in the interior of the parison tube are moved away from one another, the melt over the entire length of the parison tube experiences extension transversely to the direction of extrusion. The stretching device described above may, of course, also be of multipart design, permitting the parison tube to be subjected to various controlled degrees of extension or spreading in an axial direction. The use of a stretching device to shape the material provides not only a method of controlled preshaping of the coextruded tube but also a method of controlling the wall thickness of the parison.

The resultant plastic parison is separated below the die of the extrusion head. The molten parison stretched and held in the stretching device is then swung out of the parison extrusion area so that in the next operation it can be cut open along at least two lines matched to the requirements of the subsequent steps of the process and of the finished part. To this end, holding devices are brought up to both sides of the plastic parison. These are capable of securing and positioning the halves of the parison which are produced in the cutting process. Examples of suitable holding devices are suction heads.

The next step then brings the resultant planar-surface parts, which mostly have the shape of sheets, to the two thermoforming mold halves, preferably located opposite one another. Robots may also carry out this function. Where appropriate, the thermoforming mold halves have different shapes, for the upper and, respectively, lower portion of the hollow plastic article to be manufactured. In a first step, the two mold halves are closed onto the intermediate frame, each mold half closing onto one side of the frame. The design of the intermediate frame is such that contact of the two semifinished products is prevented. Subatmospheric pressure is applied within the mold halves, and/or compressed air is injected from the center of the closed mold, thus sucking the molten semifinished products into the mold or, respectively, pressing these against the mold by virtue of the compressed air, and use of an appropriate pressure-time profile here can further optimize the multiaxial extension of the melt and thus also the wall thickness distribution in the half shells to be manufactured. It is also possible for the thermoforming steps and blow molding steps to be carried out in succession or simultaneously in any desired sequence and combination.

After molding of the semifinished products into the mold halves, the mold is opened and the intermediate frame removed. Where appropriate, incorporated parts are then assembled into the half shells, and/or the insides of the half shells are coated. During manufacture of a plastic fuel tank it is possible, for example, to insert ventilation lines for pressure equilibration within the tank, fuel lines for equilibration of liquids within the tank, valves, anti-surge cups, or pump-related and/or tank sensor modules for refuelling into the tank half shells, and to weld these to the inner surface, which retains the melt heat. For this process too, it is preferable to use robots. In the final step of manufacture, the two half shells still located in the molds are brought together and are bonded to one another by pressing the two molds together, by again closing the mold, this time with no intermediate frame. Here, those portions of the two semifinished products which lie on the face sides of the mold halves are brought into contact with one another and preferably welded. The design of the molds and of their closing movements are such that when the half shells are pressed together material can flow into suitable chambers during the welding procedure, so that the geometry of the weld can be adapted to the requirements placed upon component strength and resistance to fuel permeation. After the jointing process, and where appropriate after further molding via blow molding or thermoforming, the tank is demolded in accordance with the cooling times required by the process technology.

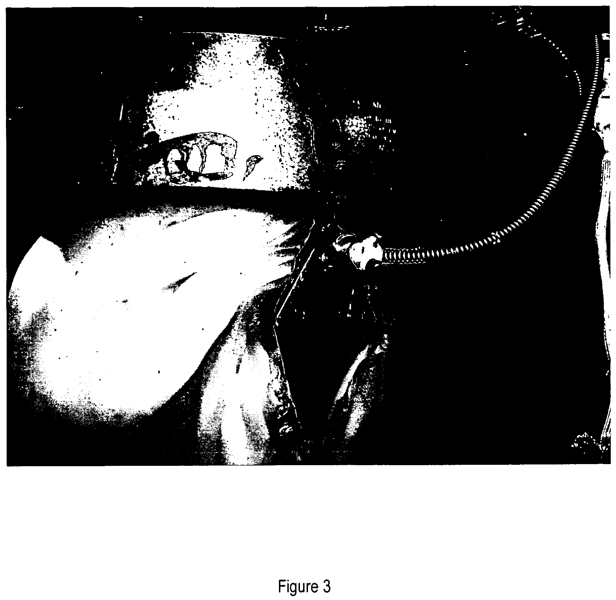

**Figure 3** depicts the distortion of the parison when using devices not according to the invention (without means of drive). This gives considerable deformation of the resultant cut edges and also of the semifinished products themselves.

**Figure 5** illustrates a intermediate frame (8) between two half shells (7).

## Claims

1. A process for producing hollow plastic articles, encompassing the following steps:
a) producing a tubular plastic parison by means of extrusion or coextrusion;
b) cutting open the plastic parison to produce two planar-surface parts by separating the plastic melt with the aid of flow dividers arranged in the interior of the blow molding head;
c) molding the planar-surface parts in two mold halves by blowing and/or thermoforming to give half shells, where a removable intermediate frame separates the mold halves from one another at least along the peripheral edges, so that the semifinished products/half shells are not in contact with one another;
d) opening the mold halves and removing the intermediate frame;
e) closing the mold halves, with the result that the half shells come into contact with one another along a peripheral rim; and
f) bonding the half shells to give a hollow article.

2. A process as claimed in claim 1, wherein, after removal of the intermediate frame, incorporated parts can be attached to the inside of at least one of the molded half shells.

3. A process as claimed in claim 2, wherein the incorporated parts are ventilation lines for pressure equilibration within the tank, fuel lines for equilibration of liquids within the tank, valves, anti-surge cups, or pump-related and/or tank sensor modules, for example.

4. A process as claimed in any of the preceding claims, wherein the planar-surface parts are molded in the mold halves to give half shells by means of thermoforming and/or blow molding.

5. A process as claimed in any of the preceding claims, wherein the bonding of the half shells takes place by adhesive bonding and/or welding.

6. A process as claimed in claim 5, wherein the heat from thermoforming is used to weld the half shells.

7. A process as claimed in any of the preceding claims, wherein, after bonding of the half shells, further molding of the hollow article takes place via thermoforming and/or blow molding.

8. A process as claimed in any of the preceding claims, wherein the intermediate frame used comprises a plate insert which substantially provides complete filling of the area between the two mold halves.

9. A process as claimed in any of the preceding claims, wherein the intermediate frame has equipment for cooling or heating.

10. A process as claimed in any of the preceding claims, wherein the intermediate frame has equipment for controlled heating of the edges of the molded half shells.

11. A process as claimed in any of the preceding claims, wherein the intermediate frame has equipment for heating the pinch-off edge of at least one mold half, preferably of both.

12. A process as claimed in any of the preceding claims, which proceeds without additional heating steps or cooling steps.

13. A process as claimed in any of the preceding claims, wherein the plastic parison has at least one layer made from polymeric material, preferably selected from the group consisting of polyethylene, polypropylene, polyvinyl chloride, polyamide, polyketone, polyester, and mixtures of these.

14. A process as claimed in any of the preceding claims, wherein the plastic parison has a structure composed of two or more layers, preferably encompassing base layer, regrind layer, adhesion-promoter layer, and/or barrier layer.

15. A process as claimed in any of the preceding claims, wherein the plastic parison has a structure composed of two or more layers encompassing, from the outside to the inside:
• a layer made from HDPE with thickness from 5 to 30%,
• a regrind layer with thickness from 10 to 82%,
• an adhesion-promoter layer with thickness from 1 to 5%,
• a barrier layer with thickness from 1 to 10%,
• an adhesion-promoter layer with thickness from 1 to 5%,
• a layer made from HDPE with thickness from 10 to 40%,
based in each case on the total thickness of the container wall.

16. A process as claimed in any of claims 1 to 15, wherein the hollow plastic articles are a plastic fuel tank in motor vehicles, a gasoline canister, a plastic tank for storage or transport of heating oil or diesel, or a transport container on a utility vehicle, for example for crop sprays, or a solvent container or a plastic bottle.

## Patentansprüche

1. Verfahren zur Herstellung von Kunststoffhohlkörpern, umfassend die folgenden Schritte:
a) Produzieren eines schlauchförmigen Kunststoffvorformlings mittels Extrusion oder Coextrusion;
b) Aufschneiden des Kunststoffvorformlings, um zwei flächige Halbzeuge zu produzieren, indem die Kunststoffschmelze mithilfe von Stromteilern getrennt wird, die im Inneren des Blasformkopfes angeordnet sind;
c) Formen der flächigen Halbzeuge in zwei Werkzeughälften durch Blasen und/oder Thermoformen zu Halbschalen, wobei ein entfernbarer Zwischenrahmen die Formhälften mindestens entlang der umlaufenden Kanten voneinander trennt, so dass sich die Halbzeuge/Halbschalen nicht berühren;
d) Öffnen der Werkzeughälften und Entfernen des Zwischenrahmens;
e) Schließen der Werkzeughälften, wodurch die Halbschalen entlang eines umlaufenden Randes in Kontakt miteinander kommen, und
f) Verbinden der Halbschalen zu einem Hohlkörper.

2. Verfahren nach Anspruch 1, wobei nach Entfernen des Zwischenrahmens Einbauteile an der Innenseite mindestens einer der geformten Halbschalen angebracht werden können.

3. Verfahren nach Anspruch 2, wobei die Einbauteile beispielsweise Lüftungsleitungen zum Druckausgleich innerhalb des Tanks, Kraftstoffleitungen zum Flüssigkeitsausgleichung innerhalb des Tanks, Ventile, Schwalltöpfe oder Pumpen- und/oder Tankgebermodule sind.

4. Verfahren nach einem der vorhergehenden Ansprüche, wobei die flächigen Halbzeuge in den Werkzeughälften mittels Thermoformen und/oder Blasformen zu Halbschalen geformt werden.

5. Verfahren nach einem der vorhergehenden Ansprüche, wobei das Verbinden der Halbschalen durch Verkleben und/oder Verschweißen erfolgt.

6. Verfahren nach Anspruch 5, wobei das Verschweißen der Halbschalen aus der Tiefziehwärme erfolgt.

7. Verfahren nach einem der vorhergehenden Ansprüche, wobei nach dem Verbinden der Halbschalen eine weitere Formung des Hohlkörpers durch Thermoformen und/oder Blasformen erfolgt.

8. Verfahren nach einem der vorhergehenden Ansprüche, wobei der verwendete Zwischenrahmen einen Zwischenplatte umfasst, die die Fläche zwischen beiden Werkzeughälften im Wesentlichen vollständig ausfüllt.

9. Verfahren nach einem der vorhergehenden Ansprüche, wobei der Zwischenrahmen mit Vorrichtungen zur Kühlung oder Beheizung ausgestattet ist.

10. Verfahren nach einem der vorhergehenden Ansprüche, wobei der Zwischenrahmen mit Vorrichtungen zur gezielten Beheizung der Kanten der geformten Halbschalen ausgestattet ist.

11. Verfahren nach einem der vorhergehenden Ansprüche, wobei der Zwischenrahmen mit Vorrichtungen zur Beheizung der Quetschkante mindestens einer Werkzeughälfte, bevorzugt beider, ausgestattet ist.

12. Verfahren nach einem der vorhergehenden Ansprüche, das ohne zusätzliche Aufheiz- oder Abkühlschritte abläuft.

13. Verfahren nach einem der vorhergehenden Ansprüche, wobei der Kunststoffvorformling mindestens eine Schicht aus Polymermaterial aufweist, vorzugsweise ausgewählt aus der Gruppe umfassend Polyethylen, Polypropylen, Polyvinylchlorid, Polyamid, Polyketon, Polyester und Mischungen hiervon.

14. Verfahren nach einem der vorhergehenden Ansprüche, wobei der Kunststoffvorformling eine aus zwei oder mehreren Schichten aufgebaute Struktur aufweist, vorzugsweise umfassend Basisschicht, Mahlgutschicht, Haftvermittlerschicht und/oder Barriereschicht.

15. Verfahren nach einem der vorhergehenden Ansprüche, wobei der Kunststoffvorformling eine aus zwei oder mehreren Schichten aufgebaute Struktur aufweist, umfassend von außen nach innen:
• eine Schicht aus HDPE mit einer Dicke von 5 bis 30 %,
• eine Mahlgutschicht mit einer Dicke von 10 bis 82 %,
• eine Haftvermittlerschicht mit einer Dicke von 1 bis 5 %,
• eine Barriereschicht mit einer Dicke von 1 bis 10 %,
• eine Haftvermittlerschicht mit einer Dicke von 1 bis 5 %,
• eine Schicht aus HDPE mit einer Dicke von 10 bis 40 %, jeweils bezogen auf die Gesamtdicke der Behälterwand.

16. Verfahren nach einem der Ansprüche 1 bis 15, wobei die Kunststoffhohlkörper ein Kunststoffkraftstoffbehälter in Kraftfahrzeugen, ein Benzinkanister, ein Kunststofftank zur Lagerung oder zum Transport von Heizöl oder Diesel oder ein Transportbehälter auf einem Nutzfahrzeug, beispielsweise für landwirtschaftliche Spritzmittel, oder ein Lösungsmittelbehälter oder eine Kunststoffflasche sind.

## Revendications

1. Procédé pour la production d'objets creux en plastique,
comprenant les étapes suivantes, consistant à :
a) produire une paraison en plastique tubulaire par extrusion ou coextrusion ;
b) ouvrir la paraison en plastique par découpe de manière à produire deux parties à surface plane par séparation de la masse fondue en plastique à l'aide de diviseurs de flux disposés à l'intérieur de la tête de moulage par soufflage ;
c) mouler les parties à surface plane dans deux demi-moules par soufflage et/ou thermoformage de manière à obtenir des demi-coquilles, où un cadre intermédiaire amovible sépare les demi-moules l'un de l'autre au moins le long des bords périphériques, de manière telle que les produits semi-finis/les demi-coquilles ne sont pas en contact l'un(e) avec l'autre ;
d) ouvrir les demi-moules et éliminer le cadre intermédiaire ;
e) fermer les demi-moules, avec comme résultat que les demi-coquilles entrent en contact l'une avec l'autre le long d'un pourtour périphérique ; et
f) lier les demi-coquilles pour obtenir un objet creux.

2. Procédé selon la revendication 1, dans lequel, après élimination du cadre intermédiaire, des pièces incorporées peuvent être fixées à l'intérieur d'au moins une des demi-coquilles moulées.

3. Procédé selon la revendication 2, dans lequel les pièces incorporées sont des conduites de ventilation pour l'équilibrage de la pression dans le réservoir, des conduites à carburant pour l'équilibrage de liquides dans le réservoir, des soupapes, des capsules manométriques ou des modules de capteur associés à une pompe et/ou de réservoir, par exemple.

4. Procédé selon l'une quelconque des revendications précédentes, dans lequel les pièces à surface plane sont moulées dans les demi-moules de manière à obtenir des demi-coquilles par thermoformage et/ou moulage par soufflage.

5. Procédé selon l'une quelconque des revendications précédentes, dans lequel la liaison des demi-coquilles est réalisée par liaison adhésive et/ou soudage.

6. Procédé selon la revendication 5, dans lequel la chaleur du thermoformage est utilisée pour souder les demi-coquilles.

7. Procédé selon l'une quelconque des revendications précédentes, dans lequel, après la liaison des demi-coquilles, le moulage ultérieur de l'objet creux est réalisé par thermoformage et/ou moulage par soufflage.

8. Procédé selon l'une quelconque des revendications précédentes, dans lequel le cadre intermédiaire utilisé comprend un insert en plaque qui fournit un remplissage substantiellement complet de la zone entre les deux demi-moules.

9. Procédé selon l'une quelconque des revendications précédentes, dans lequel le cadre intermédiaire présente un équipement pour le refroidissement ou le chauffage.

10. Procédé selon l'une quelconque des revendications précédentes, dans lequel le cadre intermédiaire présente un équipement pour le chauffage contrôlé des bords des demi-coquilles moulées.

11. Procédé selon l'une quelconque des revendications précédentes, dans lequel le cadre intermédiaire présente un équipement pour le chauffage du bord de pincement d'au moins un demi-moule, de préférence des deux demi-moules.

12. Procédé selon l'une quelconque des revendications précédentes, qui fonctionne sans étapes de chauffage ou de refroidissement supplémentaires.

13. Procédé selon l'une quelconque des revendications précédentes, dans lequel la paraison en plastique présente au moins une couche réalisée à partir de matériau polymère, de préférence choisi dans le groupe constitué par le polyéthylène, le polypropylène, le poly(chlorure de vinyle), le polyamide, la polycétone, le polyester, et leurs mélanges.

14. Procédé selon l'une quelconque des revendications précédentes, dans lequel la paraison en plastique présente une structure composée de deux couches ou plus, comprenant de préférence une couche de base, une couche en matière rebroyée, une couche de promoteur d'adhérence et/ou une couche formant une barrière.

15. Procédé selon l'une quelconque des revendications précédentes, dans lequel la paraison en plastique présente une structure composée de deux couches ou plus, comprenant, de l'extérieur vers l'intérieur :
• une couche en HDPE d'une épaisseur de 5 à 30%,
• une couche en matière rebroyée d'une épaisseur de 10 à 82%,
• une couche de promoteur d'adhérence d'une épaisseur de 1 à 5%,
• une couche formant une barrière d'une épaisseur de 1 à 10%,
• une couche de promoteur d'adhérence d'une épaisseur de 1 à 5%,
• une couche en HDPE d'une épaisseur de 10 à 40%,
dans chaque cas sur base de l'épaisseur totale de la paroi du récipient.

16. Procédé selon l'une quelconque des revendications 1 à 15 dans lequel les objets creux en plastique sont un réservoir à carburant en plastique dans des véhicules motorisés, un réservoir à essence, un réservoir en plastique pour le stockage ou le transport de mazout de chauffage ou du diesel ou un récipient de transport sur un véhicule utilitaire, par exemple pour les pulvérisations agricole, ou un récipient à solvant ou une bouteille en plastique.
